# EUROPÄISCHE PATENTANMELDUNG

(11) **EP 1 953 442 A2**
(43) Veröffentlichungstag der Anmeldung: **06.08.2008**
(21) Anmeldenummer: 08001656.1
(22) Anmeldetag: 29.01.2008
(51) Int. Cl.: F16L 35/00

(54) **Rohrstutzenverschlusseinrichtung**

(30) Priorität: 05.02.2007 DE 202007001891 U
(71) Anmelder: Zülow, Burkhard, 41352 Korschenbroich (DE)
(72) Erfinder: Zülow, Burkhard, 41352 Korschenbroich (DE)
(74) Vertreter: Paul, Dieter-Alfred

(57) **Zusammenfassung**

Die Erfindung betrifft eine Rohrstutzenverschlusseinrichtung mit einem Rohrstutzen (3a), der mit einem Deckel (4) verschlossen ist, die dadurch gekennzeichnet ist, dass der Rohrstutzen (3a) mit einer Schutzeinrichtung (5) versehen ist, die eine Schutzhaube (6) aufweist, welche über den Rohrstutzen (3a) gestülpt ist und durch zumindest eine Sicherungseinrichtung (33) gegen Freilegen des Deckels (4) gesichert ist, jedoch nach Öffnen der Sicherungseinrichtung (33) wenigstens so weit abhebbar ist, dass der Deckel (4) öffenbar ist, und dass zumindest ein Überwachungssensor (38) vorhanden ist, der bei einer nicht autorisierten Veränderung der Schutz-einrichtung (5) ein Alarmsignal erzeugt, wobei ein Datensender zur Übertragung von Daten an eine Alarmeinrichtung und/oder Zentrale vorgesehen ist, der mit dem zumindest einen Überwachungssensor (38) derart verbunden ist, dass bei Erzeugung des Alarmsignals eine Information gesendet wird.

## Beschreibung

Die Erfindung betrifft eine Rohrstutzenverschlusseinrichtung mit einem Rohrstutzen, der mit einem Deckel verschlossen ist.

Rohrstutzen, die mit einem Deckel verschlossen sind, gibt es in verschiedensten Bereichen der Technik. So ist es beispielsweise bekannt, das Grundwasser über ein in den Boden eingesetztes und über den Boden nach oben vorstehendes Peilrohr einer Grundwassermesseinrichtung zu überwachen. Das Peilrohr endet in einem Rohrstutzen, der mit einem Deckel aus Aluminium- oder Stahlguss verschlossen ist. Über das Peilrohr können Proben aus dem Grundwasser gezogen werden, die dann anschließend auf Inhaltsstoffe analysiert werden. Auch die Höhe des Grundwassers kann gemessen werden. Damit nicht Unbefugte Zugang zu dem Peilrohr haben, ist der Deckel mit einem Schloss gesichert, das nur von einem Befugten geöffnet werden kann.

Die Deckel der bekannten Peilrohre sind, weil sie aus Gussmaterial bestehen, spröde und können deshalb mit einem schweren Hammer ohne weiteres zerstört werden. Auf diese Weise können Unbefugte direkten Zugang zum Grundwasser erhalten. Damit besteht die Gefahr der Sabotage durch Einleitung von Schad-, insbesondere Giftstoffen, in das Grundwasser. Da die Peilrohre grundsätzlich in der Nähe von Wasserwerken, d.h. in Wasserschutzgebieten, stehen, wäre es ein Leichtes, das Trinkwasser für die im Einzugsgebiet lebenden Personen zu vergiften.

Auch in anderen Bereichen ist die Sicherung von mit Dekkeln verschlossenen Rohrstutzen nur unzureichend, beispielsweise bei Tanks oder bei Zapfstellen für Flüssigkeiten wie Wasser oder Öl oder für Gas. Dies gilt auch für die Rohrstutzen von Feuerlöschanlagen in großen Gebäuden, über die im Bedarfsfall an verschiedenen Stellen Löschwasser abgezaft werden kann. In allen diesen Fällen besteht die Möglichkeit des Missbrauchs, wenn der Deckel, mit dem der jeweilige Rohrstutzen verschlossen ist, durch Gewalteinwirkung zerstört wird.

Der Erfindung liegt die Aufgabe zugrunde, eine Rohrstutzenverschlusseinrichtung der eingangs genannten Art besser zu sichern.

Diese Aufgabe wird erfindungsgemäß dadurch gelöst, dass der Rohrstutzen mit einer Schutzeinrichtung versehen ist, die eine Schutzhaube aufweist, welche über den Rohrstutzen gestülpt ist und durch zumindest eine Sicherungseinrichtung gegen Freilegen des Deckels gesichert ist, jedoch nach Öffnen der Sicherungseinrichtung wenigstens so weit abhebbar ist, dass der Deckel öffenbar ist, und dass zumindest ein Überwachungssensor vorhanden ist, der bei einer nicht autorisierten Veränderung der Schutzeinrichtung ein Alarmsignal erzeugt, wobei ein Datensender zur Übertragung von Daten an eine Alarmeinrichtung und/oder Zentrale vorgesehen ist, der mit dem zumindest einen Überwachungssensor derart verbunden ist, dass bei Erzeugen des Alarmsignals eine Information gesendet wird. Diese Information ist dann von der Zentrale empfangbar und kann dort ausgewertet werden. Grundgedanke der Erfindung ist es, den Rohrstutzen und insbesondere den Deckel mechanisch durch eine Schutzhaube zu sichern und gleichzeitig Maßnahmen dafür zu treffen, dass bei einer unautorisierten Veränderung der Schutzeinrichtung eine Information gesendet werden kann, die von einer - wo auch immer angeordneten - Alarmeinrichtung und/oder einer Zentrale empfangen werden kann. Auf diese Weise bleibt eine unautorisierte Manipulation der Schutzeinrichtung nicht unbemerkt, und es können geeignete Gegenmaßnahmen getroffen werden, um die manipulierende Person von weiteren Maßnahmen, insbesondere vom vollständigen Öffnen des Rohrstutzens durch Entfernen bzw. Zerstören von dessen Deckel abzuhalten. Die Gefahr eines Missbrauchs, bei Grundwassermesseinrichtungen sogar die Gefahr einer Vergiftung bzw.
Verseuchung größerer Bevölkerungskreise, wird hierdurch drastisch verringert.

In Ausgestaltung der Erfindung ist vorgesehen, dass die Schutzhaube aus einem duktilen Werkstoff, insbesondere aus Stahl besteht. Bei gewaltsamer Einwirkung kann hierdurch allenfalls eine Verformung der Schutzhaube erreicht werden. Sofern der Rohrstutzen außerhalb von Gebäuden angeordnet ist, empfiehlt es sich zur Vermeidung von Korrosion, die Schutzhaube aus Edelstahl herzustellen.

Als geeignete Formgebung für die Schutzhaube hat sich eine solche mit obenseitiger Deckenwandung und seitlicher Mantelwandung erwiesen, wobei die Deckenwandung aus Stabilitätsgründen zweckmäßigerweise halbkugelförmig ausgebildet sein sollte. Die Mantelwandung kann dann zylindrische Ausbildung haben.

Die Sicherungseinrichtung(en) zur Fixierung der Schutzhaube an dem Rohrstutzen sollte vorzugsweise innerhalb der Schutzhaube angeordnet sein, und zwar zweckmäßigerweise so, dass sie zumindest so weit von außen, d.h. von der offenen Seite der Schutzhaube her, zugänglich sein sollte, dass sie zwecks Freilegung des Deckels des Rohrstutzens gelöst werden kann. Die Sicherungseinrichtung(en) sollte(n) jedoch so schwer zugänglich sein, dass es schon erheblicher Anstrengungen und vorzugsweise des Einsatzes von Spezialwerkzeugen bedarf, um die Sicherungseinrichtung(en) zu lösen. Vorzugsweise sollte die zumindest eine Sicherungseinrichtung mit einem Überwachungssensor versehen sein, der bei Öffnen der Sicherungseinrichtung(en) ein Alarmsignal erzeugt, das dann über den Datensender weitergegeben werden kann. Dies können übliche Öffnungsschalter oder dergleichen sein.

Die Sicherungseinrichtung(en) kann bzw. können wenigstens eine Verschraubung aufweisen, über die die Schutzhaube an dem Rohrstutzen lösbar befestigt ist. Vorzugsweise sollte die Verschraubung(en) codiert sein, d.h. nur mit speziellen Schlüsseln oder Schraubendrehern lösbar sein. Statt oder in Kombination mit einer Verschraubung kann die Sicherungeinrichtung auch ein Schloss aufweisen, das nur mit einem speziellen Schlüssel geöffnet werden kann. Das Schloss kann als integriertes Schloss, aber auch als einfaches, jedoch stabiles Vorhängeschloss ausgebildet sein, das zwei Laschen miteinander verbindet.

Die Verschlusshaube kann ausschließlich über lösbare Sicherungseinrichtungen mit dem Rohrstutzen verbunden sein, so dass sie vollständig abnehmbar ist. Statt dessen besteht jedoch die Möglichkeit, dass die Schutzhaube über ein Scharnier kippbar an dem Rohrstutzen angelenkt ist, so dass sie an einer Seite mit dem Rohrstutzen verbunden ist. Beim Lösen der Sicherungseinrichtung(en) bleibt also die Schutzhaube mit dem Rohrstutzen verbunden, kann also nicht verloren gehen und nimmt keinen zusätzlichen Raum weg. Das Scharnier kann in an sich bekannter Weise aus einem Scharnierbolzen einerseits und einer Scharnierlagerung andererseits bestehen, in der der Scharnierbolzen schwenkbar gelagert ist. Vorzugsweise sollte die Scharnierlagerung als sich parallel zur Achse des Rohrstutzens erstreckendes Langloch ausgebildet sein. Diese Ausbildung lässt eine Überdeckung zwischen Rohrstutzen und Schutzhaube zu, bei der ein Kippen der Schutzhaube nur so begrenzt möglich ist, dass der Deckel noch nicht freigelegt wird. Erst nach Anheben der Schutzhaube und damit Verfahren des Scharnierbolzens in dem Langloch in Richtung auf den Deckel des Rohrstutzens kann die Schutzhaube gekippt und somit der Deckel freigelegt werden. Die vorbeschriebene Ausbildung der Scharnierlagerung lässt eine große Überdeckung zwischen Schutzhaube und Rohrstutzen zu, wodurch der Schutz noch weiter verbessert wird.

Die bzw. eine Sicherungseinrichtung sollte auf der dem Scharnier gegenüber liegenden Seite des Rohrstutzens angeordnet sein, um die Schutzhaube möglichst wirksam an dem Rohrstutzen festzulegen.

Die Verbindung zwischen Schutzhaube und Rohrstutzen kann über Elemente wie beispielsweise Laschen, Ösen, Ringe oder dergleichen erfolgen, die an dem Rohrstutzen angeschweißt, angeschraubt oder angenietet sind. Ein solcher Eingriff in den Rohrstutzen ist jedoch in vielen Fällen unerwünscht. Für diesen Fall sieht die Erfindung vor, dass der Rohrstutzen von einem Spannring umgeben ist, der mit dem Rohrstutzen lediglich verspannt ist und über den allein die Schutzhaube mit dem Rohrstutzen verbunden ist, beispielsweise über ein Scharnier einerseits und eine Sicherungseinrichtung andererseits. Auf diese Weise entsteht lediglich eine Klemmverbindung zum Rohrstutzen, ohne dass es eines Eingriffs in den Rohrstutzen selbst bedarf. Der Spannring sollte möglichst innerhalb der Schutzhaube angeordnet sein und auch hier wiederum so geschützt, dass dessen Entfernung praktisch nicht möglich ist. Notfalls können die Spannschrauben zwecks Verspannung des Spannrings unlösbar verschweißt werden.

Als Überwachungssensoren bieten sich verschiedenste Arten von an sich bekannten Sensoren an. Beispielsweise kann ein für Erschütterungen sensibler Überwachungssensor vorgesehen sein, der vorzugsweise innerhalb der Schutzhaube angeordnet ist. Ein solcher Überwachungssensor kommt insbesondere dort in Frage, wo ein zufälliges Anstoßen an der Schutzeinrichtung bzw. dem Rohrstutzen nicht zu erwarten ist, beispielsweise weil der Rohrstutzen innerhalb eines Gebäudes an einer geschützten Stelle oder innerhalb eines Gehäuses wie einem Schrank angeordnet ist. Ein solcher Überwachungssensor ist weniger geeignet bei Anordnung des Rohrstutzens im Außenbereich, wie dies beispielsweise bei Peilrohren von Grundwassermesseinrichtungen der Fall ist. Alternativ dazu oder in Kombination damit kann der bzw. ein Überwachungssensor als Schraubenüberwachungssensor ausgebildet sein, beispielsweise zur Überwachung der zumindest einen Sicherungseinrichtung. Der Schraubenüberwachungssensor gibt Alarm, sobald die Schraube versucht wird zu lösen.

Vorzugsweise sollte der Schraubenüberwachungssensor an einer Schraube angeordnet sein, die die Schutzhaube durchsetzt und von außen zugänglich ist. Eine solche Schraube verleitet erfahrungsgemäß eine unautorisierte Person dazu, die Schraube als Befestigungsmittel anzusehen und sie als erstes zu lösen zu versuchen. Aufgrund dessen erfolgt die Alarmgabe schon früh mit der Folge, dass die Manipulation entsprechend früh entdeckt wird und Gegenmaßnahmen getroffen werden können, die vor dem endgültigen Öffnen der Schutzeinrichtung wirksam werden, beispielsweise ein Noteinsatz oder Polizeieinsatz. Eine weitere Möglichkeit besteht darin, dass ein für Lageänderungen sensibler Überwachungssensor vorgesehen ist. A1-lerdings erzeugt dieser Überwachungssensor erst dann eine Alarmgabe, wenn die Schutzhaube schon so weit gelöst ist, dass der Deckel kurz vor der Freigabe steht.

Die Sicherungseinrichtung kann beispielsweise auch ein Schließelement aufweisen, das von einem stromdurchflossenen Magneten in Schließstellung gehalten ist, bei Stromausfall aber selbsttätig, d.h. beispielsweise unter Einwirkung einer Feder oder der Schwerkraft, öffnet. Eine solche Sicherungseinrichtung ist vor allen Dingen für Rohrstutzen von Feuerlöschsystemen in großen Gebäuden nützlich, weil ein Brandfall häufig, wenn nicht in der Regel, mit einem Stromausfall im Gebäude einhergeht. In diesem Fall kann das Feuerlöschpersonal die Schutzeinrichtung ohne großen Zeitverlust sofort öffnen und hat dann Zugang zu dem Deckel und damit zu dem im Rohrstutzen anstehenden Wasser.

Es versteht sich, dass nicht nur ein Überwachungssensor vorgesehen sein kann, sondern dass mehrere Überwachungssensoren der vorgenannten Art miteinander kombiniert sein können, um bei einer unautorisierten Manipulation unabhängig von ihrer Art ein Alarmsignal erzeugt wird. Es versteht sich auch, dass es bei von der Empfangszentrale weit entfernt liegenden Rohrstutzen zweckmäßig ist, die Schutzhaube nicht nur mit einer Sicherungseinrichtung, sondern mit mehreren Sicherungseinrichtungen zu sichern, damit die unautorisierte Person viel Zeit für das Öffnen der Schutzhaube benötigt, innerhalb der dann Gegenmaßnahmen beispielsweise in Form eines Noteinsatzes von in der Zentrale befindlichen Überwachungspersonen oder eines Polizeieinsatzes rechtzeitig vor dem endgültigen Öffnen der Schutzhaube getroffen werden können.

Der Datensender kann über elektrische Kabel mit der Zentrale oder einer Alarmeinrichtung verbunden sein. Dabei besteht allerdings die Gefahr, dass das Kabel vor der Manipulation der Schutzeinrichtung durchgeschnitten wird. Insoweit kann allerdings Vorsorge getragen werden, indem eine Sabotageschaltung vorgesehen wird, die beim Druchtrennen des Kabels eine Information zur Initiierung der Alarmeinrichtung bzw. für die Zentrale erzeugt. Der Vorzug einer solchen Verkabelung besteht darin, dass die Schutzeinrichtung keine eigene Stromversorgung benötigt. Sie kommt jedoch allenfalls innerhalb von Gebäuden in Frage.

Insbesondere bei Rohrstutzen, die im Außenbereich und weit entfernt von einer Zentrale angeordnet sind, wie dies bei Peilrohren von Grundwassermesseinrichtungen der Fall ist, empfiehlt es sich, dass der Datensender für eine drahtlose Übertragung ausgebildet ist, beispielsweise ein GSM-Modul aufweist, wie es in Mobilfunkgeräten vorhanden ist. Auf diese Weise wird bei Auslösen eines Alarmsignals durch einen Überwachungssensor eine Information in Form eines Funksignals erzeugt, das dann von der Alarmeinrichtung bzw. der Zentrale empfangen werden kann. Dabei sollte der Datensender so ausgebildet sein, dass er nicht nur eine Information über das Alarmsignal erzeugt, sondern gleichzeitig auch eine Information über den Standort des Rohrstutzens, so dass in der Zentrale erkannt werden kann, an welchem Rohrstutzen eine unautorisierte Manipulation stattfindet und demgemäß der Notfalleinsatz auf kürzestem Wege zu dem betroffenen Rohrstutzen erfolgt. Selbstverständlich besteht die Möglichkeit, dies auch in der Version mit Kabelübertragung vorzusehen.

Da die Schutzhaube im Falle ihrer Herstellung aus Stahl ähnliche Eigenschaften hat wie ein faradeyischer Käfig und demgemäß für Funksignale relativ undurchlässig ist, sollte der Datensender mit einer außerhalb der Schutzhaube angeordneten Antenne verbunden sein. Allerdings besteht dann die Gefahr, dass die Antenne vor Manipulation der Schutzhaube gewaltsam entfernt wird, selbst wenn sie gut befestigt ist. Deshalb ist nach der Erfindung vorgeschlagen, dass die Antenne innerhalb einer über die Schutzhaube gestülpten Außenhaube angeordnet ist, die aus einem für Funksignale durchlässigen Material, beispielsweise einem Kunststoff, besteht. Sie sollte mit der Schutzhaube über zumindest eine Schraube verbunden sein, die mit einem als Schraubenüberwachungssensor ausgebildeten Überwachungssensor versehen ist. Sofern versucht wird, die Außenhaube zu entfernen, wird ein Alarmsignal erzeugt, obwohl noch keine Manipulation der Schutzhaube vorliegt. Vorzugsweise sollten mehrere solcher Schrauben jeweils mit Schraubenüberwachungssensor vorgesehen sein.

Nach einem weiteren Merkmal der Erfindung ist vorgesehen, dass eine Alarmeinrichtung innerhalb der Schutzeinrichtung vorgesehen ist. Die Alarmeinrichtung kann unmittelbar mit dem bzw. einem der Überwachungssensoren verbunden sein oder aber eine Information über die Erzeugung eines Alarmsignals von dem Datensender erhalten. Dabei kann die Alarmeinrichtung ein optisches und/oder akustisches Alarmsignal erzeugen. Eine solche Anordnung kommt insbesondere dann in Frage, wenn der bzw. die Rohrstutzen im Sicht- oder Hörbereich einer Überwachungszentrale oder im Bereich hoher Publikumsfrequenz liegt. Statt dessen oder in Kombination damit kann die Alarmeinrichtung aber auch in der Zentrale selbst oder auch dazwischen angeordnet sein. Erfahrungsgemäß hält insbesondere eine sehr laute akustische Signalgabe viele Personen davon ab, ihren Manipulationsversuch fortzusetzen, da sie die Entdeckung fürchten.

In weiterer Ausgestaltung der Erfindung ist vorgesehen, dass die Schutzeinrichtung eine Stromversorgung hat, die mit einem Überwachungssensor versehen ist, der die Spannung der Stromversorgung des Datensenders erfasst und bei Unterschreiten eines Mindestwertes ein Alarmsignal erzeugt, das an den Datensender geht. Dabei sollte der Mindestwert so hoch sein, dass der Datensender noch eine geeignete Information an die Alarmeinrichtung und/oder Zentrale absetzen kann. Auf diese Weise kann festgestellt werden, ob die Schutzeinrichtung noch funktionsfähig ist, und es können Gegenmaßnahmen, beispielsweise ein Austausch der für die Stromversorgung erforderlichen Batterie, vorgenommen werden.

Nach der Erfindung ist schließlich vorgesehen, dass der Rohrstutzen Teil eines Peilrohrs einer Grundwassermesseinrichtung ausgebildet ist und einer der Überwachungssensoren als ein eine Wassereigenschaft überwachender Messsensor ausgebildet ist. Auf diese Weies wird der Schutzeinrichtung eine Zusatzfunktion dergestalt zugewiesen, dass das Grundwasser mit Hilfe der Schutzeinrichtung auch hinsichtlich seiner Qualität überwacht werden kann. Außerdem wird bei Versagen sämtlicher anderer Sicherungseinrichtungen und Überwachungssensoren spätestens dann ein Alarmsignal erzeugt, wenn bei unautorisiertem Öffnen der Schutzeinrichtung und des Deckels schädliche Substanzen in das Peilrohr eingebracht werden und damit in das Grundwasser gelangen.

In der Zeichnung ist die Erfindung anhand eines Ausführungsbeispiels näher veranschaulicht. Es zeigen:

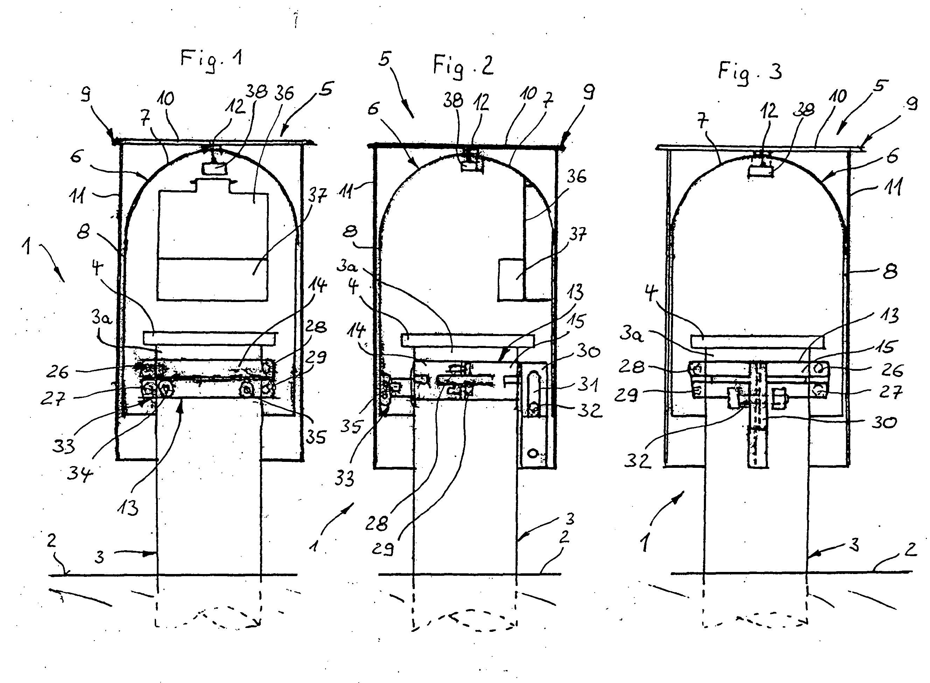

- Figur 1: einen Vertikalschnitt durch eine Grundwassermesseinrichtung mit der erfindungsgemäßen Schutzeinrichtung;
- Figur 2: einen Vertikalschnitt durch die Grundwassermesseinrichtung gemäß Figur 1 in gegenüber Figur 1 um 90° verdrehter Ansicht und
- Figur 3: einen Vertikalschnitt durch die Grundwassermesseinrichtung gemäß den Figuren 1 und 2 in gegenüber Figur 2 um 90° verdrehter Ansicht.

Die in den Figuren dargestellte Grundwassermesseinrichtung 1 weist ein aus einem Boden 2 nach oben senkrecht hochstehendes Peilrohr 3 auf, das in einem Rohrstutzen 3a endet, der obenseitig mit einem Deckel 4 verschlossen ist. Das Peilrohr 3 erstreckt sich in den Boden 2 hinein bis in eine Tiefe, in der sich Grundwasser befindet. Der Deckel 4 ist durch ein hier nicht näher dargestelltes Schloss gesichert, so dass er nicht ohne weiteres geöffnet werden kann. Da er - wie in vielen, an sich bekannten Fällen gegeben - aus einem gegossenen Metall, beispielsweise Grauguss oder Aluminiumguss, besteht, ist er relativ spröde und kann deshalb durch einen Schlag mit einem schweren Hammer zerstört werden.

Über den Rohrstutzen 3 gestülpt ist eine Schutzeinrichtung 5. Die Schutzeinrichtung 5 weist als wesentliches Teil eine aus Edelstahl hergestellte Schutzhaube 6 auf, die eine kuppelförmige Deckenwandung 7 hat, an die sich nach unten hin ein zylindrischer Haubenmantel 8 anschließt. Der Haubenmantel 8 überdeckt den Rohrstutzen 3 über eine erhebliche Länge und verläuft koaxial zu dem Rohrstutzen 3.

Über die Schutzhaube 6 ist eine Außenhaube 9 gestülpt, die aus einem Kunststoff besteht und an dessen Innenseite eine hier nicht näher dargestellte Funkantenne angeordnet ist. Die Funkantenne kann auch in das Material der Außenhaube 9 eingelassen sein. Die Außenhaube 9 hat eine ebene, kreisförmige Deckenwandung 10, an die sich nach unten ein zylindrischer Haubenmantel 11 anschließt, der bis weit unterhalb des unteren Endes der Schutzhaube 6 geht, also einen höheren Überdeckungsgrad hat als diese. Über eine in der Mitte der Deckenwandungen 7 bzw. 10 angeordnete Zentralschraube 12 ist die Außenhaube 9 an der Schutzhaube 6 fixiert. Da sie mit ihrer Innenseite eng an dem Haubenmantel 8 der Schutzhaube 6 anliegt, wird sie durch diese geführt.

Der Rohrstutzen 3 wird im oberen Bereich von einem Spannring 13 umgeben, der symmetrisch in zwei jeweils über 180° gehende Spannringsegmente 14, 15 unterteilt ist, die über Spannschrauben 26 bis 29 so miteinander verspannt sind, dass der Spannring 13 kraftschlüssig an dem Rohrstutzen 3 fixiert ist. In der Mitte des einen Spannringsegments 14 ist ein Scharniersteg 30 angeschweißt, der ein sich parallel zur Rohrachse des Rohrstutzens 3 erstreckendes Langloch 31 aufweist. Das Langloch 31 durchsetzt ein Scharnierbolzen 32, der an der Innenwand der Schutzhaube 6 bzw. dessen Haubenmantel 8 angebracht ist. Auf diese Weise ist die Schutzhaube 6 scharnierartig mit dem Spannring 13 und über diesen mit dem Rohrstutzen 3 verbunden.

Auf der dem Scharniersteg 30 gegenüber liegenden Seite des Spannrings 13 ist eine Sicherungseinrichtung 33 vorgesehen. Sie hat zwei Verschraubungen 34, 35, über die das Spannringsegment 15 mit der Innenseite der Schutzhaube 6 bzw. dessen Haubenmantel 8 lösbar befestigt. Die Verschraubungen 34, 35 weisen codierte Schrauben auf, die ein Lösen nur mit Spezialwerkzeugen zulassen.

An der Innenseite der Schutzhaube 6 ist eine Montageplatte 36 befestigt, die für verschiedene Zwecke genutzt werden kann. Im Ausführungsbeispiel ist an der Montageplatte 36 ein Gehäuse 37 befestigt, in dem ein GSM-Modul als drahtloser Datensender sowie weitere Steuerungseinrichtungen untergebracht sind. Das GSM-Modul ist mit der Antenne an der bzw. in der Außenhaube 9 verbunden. An der Unterseite der Zentralschraube 12 ist ein Schraubenüberwachungssensor 38 angeordnet, der ein Alarmsignal erzeugt, sobald versucht wird, die Zentralschraube 12 von außen her beispielsweise mit Hilfe eines Schraubendrehers zu lösen. Der Schraubenüberwachungssensor 38 ist mit dem GSM-Modul innerhalb des Gehäuses 37 derart verbunden, dass das GSM-Modul bei Erzeugung eines Alarmsignals durch den Schraubenüberwachungssensor 38 eine Information an eine weit entfernte Zentrale funkt, die die dort anwesenden Überwachungspersonen erkennen lässt, dass ein Manipulationsversuch unternommen wird und an welchem Peilrohr 3. Selbstverständlich können die Verschraubungen 34, 35 an der Sicherungseinrichtung 33 ebenfalls mit Schraubenüberwachungssensoren versehen sein, die mit dem GSM-Modul in dem Gehäuse 37 verbunden sind und demgemäß ebenfalls ein Funksignal erzeugen können.

Ein autorisiertes Öffnen der Grundwassermesseinrichtung 1 geschieht in der Weise, dass - nach entsprechender Information der Zentrale - die Zentralschraube 12 entfernt und die Außenhaube 9 abgehoben wird. Hierdurch wird die Sicherungseinrichtung 33 besser zugänglich und kann mit Hilfe eines Spezialwerkzeuges geöffnet werden. Dann wird die Schutzhaube 6 so weit angehoben, bis der Scharnierbolzen 32 gegen das obere Ende des Langlaufs 31 stößt. Die Schutzhaube 6 ist dann in einer solchen Position, dass sie um den Scharnierbolzen 32 so weit verschwenkt werden kann, dass der Deckel 4 freigegeben wird. Er kann dann geöffnet werden, um eine Kontrolle des in dem Peilrohr stehenden Grundwasser vornehmen zu können. Außerdem besteht dann die Möglichkeit, die Batterie für die Stromversorgung des GSM-Moduls und der Überwachungssensoren auszutauschen, wenn ein Überwachungssensor am bzw. im GSM-Modul eine Spannung anzeigt, die unterhalb eines bestimmten Mindestwertes liegt. Das Schließen der Schutzeinrichtung 5 nach Schließen des Deckels 4 geschieht dann in umgekehrter Weise.

## Patentansprüche

1. Rohrstutzenverschlusseinrichtung mit einem Rohrstutzen (3a), der mit einem Deckel (4) verschlossen ist, **dadurch gekennzeichnet, dass** der Rohrstutzen (3a) mit einer Schutzeinrichtung (5) versehen ist, die eine Schutzhaube (6) aufweist, welche über den Rohrstutzen (3a) gestülpt ist und durch zumindest eine Sicherungseinrichtung (33) gegen Freilegen des Deckels (4) gesichert ist, jedoch nach Öffnen der Sicherungseinrichtung (33) wenigstens so weit abhebbar ist, dass der Deckel (4) öffenbar ist, und dass zumindest ein Überwachungssensor (38) vorhanden ist, der bei einer nicht autorisierten Veränderung der Schutzeinrichtung (5) ein Alarmsignal erzeugt, wobei ein Datensender zur Übertragung von Daten an eine Alarmeinrichtung und/oder Zentrale vorgesehen ist, der mit dem zumindest einen Überwachungssensor (38) derart verbunden ist, dass bei Erzeugung des Alarmsignals eine Information gesendet wird.

2. Rohrstutzenverschlusseinrichtung nach Anspruch 1, **dadurch gekennzeichnet, dass** die Schutzhaube (6) aus Stahl, insbesondere Edelstahl besteht.

3. Rohrstutzenverschlusseinrichtung nach Anspruch 1 oder 2, **dadurch gekennzeichnet, dass** die Schutzhaube (6) aus einer obenseitigen Deckenwandung (7) und einer seitlichen Mantelwandung (8) besteht.

4. Rohrstutzenverschlusseinrichtung nach Anspruch 3, **dadurch gekennzeichnet, dass** die Deckenwandung (7) halbkugelförmig ausgebildet ist.

5. Rohrstutzenverschlusseinrichtung nach einem der Ansprüche 1 bis 4, **dadurch gekennzeichnet, dass** die Mantelwandung (8) zylindrisch ausgebildet ist.

6. Rohrstutzenverschlusseinrichtung nach einem der Ansprüche 1 bis 5, **dadurch gekennzeichnet, dass** die Sicherungseinrichtung(en) (33) innerhalb der Schutzhaube (6) angeordnet ist bzw. sind.

7. Rohrstutzenverschlusseinrichtung nach einem der Ansprüche 1 bis 6, **dadurch gekennzeichnet, dass** die zumindest eine Sicherungseinrichtung (33) mit einem Überwachungssensor versehen ist, der bei Öffnen der Sicherungseinrichtung(en) ein Alarmsignal erzeugt.

8. Rohrstutzenverschlusseinrichtung nach einem der Ansprüche 1 bis 7, **dadurch gekennzeichnet, dass** die Sicherungseinrichtung(en) (33) wenigstens eine Verschraubung (34, 35) aufweist bzw. aufweisen, über die die Schutzhaube an dem Rohrstutzen (3a) lösbar befestigt ist.

9. Rohrstutzenverschlusseinrichtung nach Anspruch 8, **dadurch gekennzeichnet, dass** die Verschraubung(en) (34, 35) codiert ist bzw. sind.

10. Rohrstutzenverschlusseinrichtung nach einem der Ansprüche 1 bis 9, **dadurch gekennzeichnet, dass** die bzw. eine Sicherungseinrichtung (33) ein Schloss aufweist.

11. Rohrstutzenverschlusseinrichtung nach einem der Ansprüche 1 bis 10, **dadurch gekennzeichnet, dass** die Schutzhaube (6) über ein Scharnier (30, 31, 32) kippbar an dem Rohrstutzen (3a) angelenkt ist.

12. Rohrstutzenverschlusseinrichtung nach Anspruch 11, **dadurch gekennzeichnet, dass** das Scharnier aus einem Scharnierbolzen (32) einerseits und einer Scharnierlagerung (31) andererseits besteht, in der der Scharnierbolzen (32) schwenkbar gelagert ist.

13. Rohrstutzenverschlusseinrichtung nach Anspruch 12, **dadurch gekennzeichnet, dass** die Scharnierlagerung als sich parallel zur Achse des Rohrstutzens erstreckendes Langloch (31) ausgebildet ist.

14. Rohrstutzenverschlusseinrichtung nach einem der Ansprüche 11 bis 13, **dadurch gekennzeichnet, dass** die bzw. eine Sicherungseinrichtung (33) auf der dem Scharnier (30, 31, 32) gegenüber liegenden Seite des Rohrstutzens (3a) angeordnet ist.

15. Rohrstutzenverschlusseinrichtung nach einem der Ansprüche 1 bis 14, **dadurch gekennzeichnet, dass** der Rohrstutzen (3a) von einem Spannring (13) umgeben ist, der mit dem Rohrstutzen (3a) lediglich verspannt ist und über die allein die Schutzhaube (6) mit dem Rohrstutzen (3a) verbunden ist.

16. Rohrstutzenverschlusseinrichtung nach Anspruch 15, **dadurch gekennzeichnet, dass** der Spannring (13) innerhalb der Schutzhaube (6) angeordnet sind.

17. Rohrstutzenverschlusseinrichtung nach einem der Ansprüche 1 bis 16, **dadurch gekennzeichnet, dass** ein für Erschütterungen sensibler Überwachungssensor vorgesehen ist.

18. Rohrstutzenverschlusseinrichtung nach einem der Ansprüche 1 bis 17, **dadurch gekennzeichnet, dass** der bzw. ein Überwachungssensor als Schraubenüberwachungssensor ausgebildet ist.

19. Rohrstutzenverschlusseinrichtung nach Anspruch 18, **dadurch gekennzeichnet, dass** der Schraubenüberwachungssensor (38) an einer Schraube (12) angeordnet ist, die die Schutzhaube (6) durchsetzt und von außen zugänglich ist.

20. Rohrstutzenverschlusseinrichtung nach einem der Ansprüche 1 bis 19, **dadurch gekennzeichnet, dass** ein für Lageänderungen sensibler Überwachungssensor vorgesehen ist.

21. Rohrstutzenverschlusseinrichtung nach einem der Ansprüche 1 bis 20, **dadurch gekennzeichnet, dass** die Sicherungseinrichtung ein Schließelement aufweist, das von einem stromdurchflossenen Magneten in Schließstellung gehalten ist, bei Stromausfall aber selbsttätig öffnet.

22. Rohrstutzenverschlusseinrichtung nach einem der Ansprüche 1 bis 21, **dadurch gekennzeichnet, dass** der Datensender für eine drahtlose Übertragung ausgebildet ist.

23. Rohrstutzenverschlusseinrichtung nach Anspruch 22, **dadurch gekennzeichnet, dass** der Datensender als GSM-Modul ausgebildet ist.

24. Rohrstutzenverschlusseinrichtung nach Anspruch 23, **dadurch gekennzeichnet, dass** der Datensender eine Information erzeugt, die auch einen Hinweis auf den Standort des Rohrstutzens enthält.

25. Rohrstutzenverschlusseinrichtung nach einem der Ansprüche 22 bis 24, **dadurch gekennzeichnet, dass** der Datensender mit einer außerhalb der Schutzhaube (6) angeordneten Antenne verbunden ist.

26. Rohrstutzenverschlusseinrichtung nach Anspruch 25, **dadurch gekennzeichnet, dass** die Antenne innerhalb einer über die Schutzhaube (6) gestülpten Außenhaube (9) angeordnet ist, die aus einem für Funksignale durchlässigen Material besteht.

27. Rohrstutzenverschlusseinrichtung nach einem der Ansprüche 1 bis 26, **dadurch gekennzeichnet, dass** die Außenhaube (9) mit der Schutzhaube (6) über zumindest eine Schraube (12) verbunden ist, die mit einem Schraubenüberwachungssensor (38) versehen ist.

28. Rohrstutzenverschlusseinrichtung nach Anspruch 26 oder 27, **dadurch gekennzeichnet, dass** die Außenhaube (9) einen Haubenmantel (11) aufweist, der über das offene Ende der Schutzhaube (6) vorsteht.

29. Rohrstutzenverschlusseinrichtung nach einem der Ansprüche 1 bis 28, **dadurch gekennzeichnet, dass** die Alarmeinrichtung innerhalb der Schutzeinrichtung (5) angeordnet ist.

30. Rohrstutzenverschlusseinrichtung nach einem der Ansprüche 1 bis 29, **dadurch gekennzeichnet, dass** die Schutzeinrichtung (5) eine Stromversorgung hat, die mit einem Überwachungssensor versehen ist, der die Spannung der Stromversorgung des Datensenders erfasst und bei Unterschreiten eines Mindestwertes ein Alarmsignal erzeugt.

31. Rohrstutzenverschlusseinrichtung nach einem der Ansprüche 1 bis 30, **dadurch gekennzeichnet, dass** der Rohrstutzen (3a) Teil eines Peilrohrs (3) einer Grundwassermesseinrichtung (1) ausgebildet ist und einer der Überwachungssensoren als ein eine Wassereigenschaft überwachender Messsensor ausgebildet ist.
